(19) Europäisches Patentamt
European Patent Office
Office européen des brevets

(11) Veröffentlichungsnummer: **0 296 319 B1**

(12) **EUROPÄISCHE PATENTSCHRIFT**

(45) Veröffentlichungstag der Patentschrift: **08.01.92**

(51) Int. Cl.5: **A01N 43/76**, //(A01N43/76, 43:40)

(21) Anmeldenummer: **88105355.7**

(22) Anmeldetag: **09.11.84**

(60) Veröffentlichungsnummer der früheren Anmeldung nach Art. 76 EPÜ: **0 144 796**

Die Akte enthält technische Angaben, die nach dem Eingang der Anmeldung eingereicht wurden und die nicht in dieser Patentschrift enthalten sind.

# (54) Herbizide Mittel auf der Basis von Heteroaryloxyphenoxycarbonsäure-Derivaten.

(30) Priorität: **21.04.84 DE 3415069**
**19.11.83 DE 3341884**

(43) Veröffentlichungstag der Anmeldung: **28.12.88 Patentblatt 88/52**

(45) Bekanntmachung des Hinweises auf die Patenterteilung: **08.01.92 Patentblatt 92/02**

(84) Benannte Vertragsstaaten: **AT BE CH DE FR GB IT LI NL SE**

(56) Entgegenhaltungen:

**CHEMICAL ABSTRACTS, Band 99, Nr. 5, 1. August 1983, Seite 186, Zusammenfassung Nr. 34437g, Columbus, Ohio, US; H.F. TAYLOR et al.: "Compatible and antagonistic mixtures of diclofopmethyl and flamprop-methyl with herbicides used to control broad-leaved weeds", & WEED. RES. 1983, 23(3), 185-90**

**R. WEGLER: "Chemie der Pflanzenschutz- und Schädlingsbekämpfungsmittel", Band 8, 1982, Seiten 1-25, Springer Verlag, Berlin, DE; H.J. NESTLER: "Phenoxy-phenoxypropionic acid derivatives and related compounds"**

(73) Patentinhaber: **HOECHST AKTIENGESELLSCHAFT**
**Postfach 80 03 20**
**W-6230 Frankfurt am Main 80(DE)**

(72) Erfinder: **Schumacher, Hans, Dr.**
**Claudiusstrasse 4**
**W-6093 Flörsheim am Main(DE)**
Erfinder: **Heinrich, Rudolf, Dr.**
**Taunusstrasse 19**
**W-6233 Kelkheim (Taunus)(DE)**
Erfinder: **Marks, Hans-Günter**
**Spindelstrasse 9**
**W-6234 Hattersheim am Main(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Diese Anmeldung ist eine Teilanmeldung aus EP-A 0144 796 (Anmeldenr. 84113518.9).

Aus EP-A 0043 802 sind bereits Herbizid-Kombinationen von Pyridyloxyphenoxycarbonsäure-Derivaten mit Halogen-hydroxy-benzonitril-Verbindungen bekannt.

Aus Chemical Abstracts, Bd. 99, Nr. 34437 g (1983) ist bereits bekannt, Diclofop-methyl mit einer Verbindung der weiter unten stehenden Formel B zu kombinieren, wobei synergistische Wirkungssteigerungen bei Avena fatua beobachtet werden. Es wurden nun neue Herbizid-Kombinationen von Heteroaryloxyphenoxycarbonsäure-Derivaten gefunden, die überraschende vorteilhafte Eigenschaften besitzen.

Gegenstand der vorliegenden Erfindung sind daher herbizide Mittel, die gekennzeichnet sind, durch einen Gehalt an einer Verbindung der Formel (A),

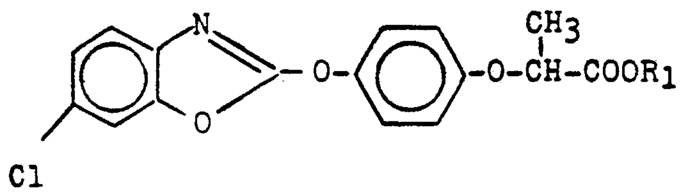

(A)

worin

$R_1$ = H, ($c_1$-$C_4$)-Alkyl, ($C_2$-$C_4$)-Alkinyl oder ein Kationäquivalent bedeutet,

in Kombination mit einer Verbindung der Formel (B)

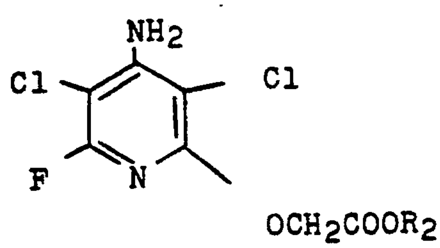

(B)

worin

$R_2$ = H, ($C_1$-$C_8$)-Alkyl oder ein Kationäquivalent bedeutet.

Unter einem Kationaäquivalent ist jeweils ein Äquivalent eines Metallkations wie beispielsweise eines Alkalimetall oder Erdalkalikations oder eines gegebenfalls ($C_1$-$C_4$)-alkylsubstituierten Ammoniumions zu verstehen.

Da die Verbindungen der Formel (A) im Propionsäureteil ein Asymmetriezentrum besitzen, können sie als reine Stereoisomeren oder als Steroisomerengemische vorliegen.

Die Verbindungen der Formel (A) sind insbesondere wirksam gegen monokotyle Schadpflanzen wie beispielsweise Alopecurus myosuroides und Avena fatua (s. DE-OS 2 640 730).

$R_1$ besitzt insbesondere die Bedeutung ($C_1$-$C_2$)Alkyl. Unter den Verbindungen der Formel (A) ist α-[4-(6-Chlorbenzoxazolyloxy)phenoxy]-propionsäure-ethylester ($A_1$) besonders bevorzugt.

Bevorzugt unter den Verbindungen der Formel (B) ist die Verbindung mit $R_2$ = Octyl ($B_1$). Diese Verbindung ist beschrieben in Weed Research Organization, technical report No. 63.

Die Verbindungen der Formel (B) zeichnen sich durch gute Wirksamkeit gegen dikotyle Schadpflanzen wie Stellaria media und Chenopodium album aus.

Bei der Kombination der Verbindungen der Formel (A) mit Verbindungen der Formel (B) zeigten sich überraschenderweise auffallende synergistische Effekte.

Die erfindungsgemäßen Wirkstoffkombinationen können zur Bekämpfung unerwünschter Pflanzenarten wie z.B. Alopecurus myosuroides, Avena fatua, Stellaria media, Chenopodium album, Setaria viridis, Phalaris sp., Galium aparine, Matricaria sp., Sinapis arvense, Miosotis arvense in Nutzpflanzenkulturen, insbesondere in Getreidekulturen wie Weizen, Gerste, vorzugsweise Weizen, eingesetzt werden.

Die Mischungsverhältnisse der Komponenten der Formeln (A) und (B) können innerhalb weiter Grenzen variieren. So liegt das Verhältnis der Komponenten A zu B im Bereich zwischen 1 : 10 und 15 : 1; bevorzugt ist der Bereich 1 : 5 bis 5 : 1.

Die erfindungsgemäßen Kombinationen können entweder als Tankmischungen, bei denen die einzlenen Wirkstoffkomponenten erst unmittelbar vor der Applikation miteinander vermischt werden, oder als Fertigformulierungen zur Anwandung gebracht werden. Als Fertigmischungen können sie z.B. in Form von benetzbaren Pulvern, emulgierbaren Konzentraten, Lösungen, Dispersionen, Stäubemitteln oder Granulaten formuliert sein und enthalten dann gegebenfalls die üblichen Formulierungshilfsmittel, wie Netz-, Haft-, Emulgier-, Dispergiermittel, feste oder flüssige Inerstoffe, Mahlhilfsmittel unnd Lösungsmittel.

Benetzbare Pulver sind in Wasser gleichmäßig dispergierbare Präparate, die neben dem Wirkstoff außer gegebenenfalls Verdünnungs- bzw. Inertstoffen noch Netzmittel, z.B. polyoxethylierte Alkylphenole, polyoxethylierte Oleyl- oder Stearylamine, Alkyl- oder Alkylphenylsulfonate und Dispergiermittel, z.B. ligninsulfonsaures Natrium, 2,2'dinaphtyl-methan-6,6'-disulfonsaures Natrium, dibutylnaphthalinsulfonsaures Natrium oder auch oleylmethyltaurinsaures Natrium enthalten können.

Emulgierbare Konzentrate können beispielsweise durch Auflösen des Wirkstoffes in einem organischen Lösungsmittel, z.B. Butanol, Cyclohexanon, Dimethylformamid, Xylol, Isophoron oder auch höhersiedenden Aromaten unter Zusatz von einem oder mehreren Emulgatoren hergestellt werden. Als Emulgatoren können beispielsweise verwendet werden: Alkylarylsulfonsaure Calciumsalze, Fettsäurepolyglykolester, Alkylarylpolyglykolther, Fettalkoholpolyglykolether, polyoxethylierte Oleyl- oder Stearylamine, Propylenoxid-Ethylenoxid-Kondensationsprodukte, Alkylpolyether, Sorbitan-Fettsäureester, Alkylaryl-Propylenoxid-Ethylenoxid-Kondensationsprodukte u.a.

Stäubemittel erhält man durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können entweder durch Verdüsen einer Lösung des Wirkstoffes auf adsorptionsfähiges, granuliertes Inertmaterial hergestellt werden oder durch Aufbringen von Wirkstoffkonzentraten mittels eines Bindemittels, z.B. Polyvinylalkohol, polyacrylsaurem Natrium, Methylhydroxyethylcellulose oder auch Mineralölen auf die Oberfläche von Trägerstoffen, wie Sand, Kaolinite oder von granuliertem Inertmaterial. Auch können geeignete Wirkstofformulierungen in der für die Herstellung von Düngemittelgranulaten üblichen Weise - gewünschtenfalls in Mischung mit Düngemitteln - hergestellt werden.

Die erfindungsgemäßen synergistischen Wirkstoffmischungen aus Verbindungen der Formeln A und B können in Form üblicher Zubereitungen, insbesondere als benetzbare Pulver, emulgierbare Konzentrate, Lösungen, Dispersionen, Stäubemittel oder Granulate formuliert werden. Der Gesamtwirkstoffgehalt der marktfähigen Formulierungen beträgt dann ca. 2 bis 95 Gew.-%, vorzugsweise 10 bis 70 Gew.-%, wobei der Rest zu 100 Gew.-% aus üblichen Formulierungshilfsmitteln, wie Haft-, Netz-, Emulgier-, Dispergier-, Füll-, Lösungsmitteln und Trägerstoffen besteht.

In benetzbaren Pulvern variiert die Gesamt-Wirkstoffkonzentration im Bereich von etwa 10 bis 80 Gew.-%.

Bei emulgierbaren Konzentraten liegt die Gesamtwirkstoffkonzentration im Bereich von etwa 10 bis 70 Gew.-%. Bei Granulaten beträgt sie etwa 2 bis 10 Gew.-%. Staubförmige Formulierungen enthalten etwa 5 bis 20 Gew.-% an Wirkstoffgemisch.

Gegenstand der Erfindung sind daher auch herbizide Mittel mit einem Gehalt von 2 bis 95 Gew.-%, vorzugsweise 10 bis 70 Gew.-% an einer Wirkstoffkombination aus Verbindungen der Formel A und B, wobei der Rest zu 100 Gew.-% aus üblichen Formulierungshilfsmitteln besteht.

Zur Anwandung werden die genannten Konzentrate gegebenfalls in üblicher Weise verdünnt, z.B. benetzbare Pulver, emulgierbare Konzentrate und Dispersionen mittels Wasser. Staubförmige und granulierte Zubereitungen sowie versprühbare Lösungen werden vor der Anwendunng im allgemeinen nicht mehr mit weiteren inerten Stoffen verdünnt. Mit den äußeren Bedingungen, wie Temperatur, Feuchtigkeit u.a. variiert auch die erforderliche Aufwandmenge an den erfindungsgemaßen Mitteln. Sie kann sich innerhalb weiter Grenzen bewegen und beträgt im allgemeinen zwischen 0,2 und 10kg/ha Wirkstoffkombination, vorzugsweise 0,3 - 2,0 kg/ha.

Die Erfindung wird durch die nachfolgenden Beispiele erläutert.

Formulierungsbeispiele

Allgemeine Vorschrift:

Ein Wirkstoff wurde in dem betreffenden Lösungsmittelgemisch bei 50 - 60 °C gelöst und anschließend der zweite Wirkstoff, gegebenenfalls in Form einer Schmelze, zugegeben. Unter gutem Rühren setzte man die einzelnen Emulgatorkomponenten zu und Gemisch erkalten. Die erhaltenen emulgierbaren Konzentrate sind leicht bis mäßig braun gefärbt.

Nach dieser Verfahrensweise werden die in den Beispielen 1-3 der folgenden Tabelle angegebenen

Wirkstoffe und Formulierungshilfsmittel miteinander vermischt. Die Zahlenangaben in der Tabelle entsprechen Gewichtsteilen.

Formulierungsbeispiele

| Bestandteile | Beispiel Nr. | | |
|---|---|---|---|
| | 1 | 2 | 3 |
| Wirkstoff ($A_1$), techn. | 10,1 | 3,6 | 16,6 |
| Wirkstoff ($B_1$), techn. | 13,8 | 22,7 | 4,9 |
| Xylol | 28,1 | 28,7 | 33,5 |
| Isophoron | | 15,0 | |
| Cyclohexanon | 20,0 | | |
| Dimethylformamid | | | 15,0 |
| Dodecylbenzolsulfonsaures Ca | 5,0 | 5,0 | 5,0 |
| Ethoxyliertes Rizinusöl (40 EO) | 8,0 | 8,0 | 8,0 |
| Ethoxyliertes Nonylphenol (10 EO) | 15,0 | | 15,0 |
| Ethoxylierter Oleylalkohol (15 EO) | | 2,0 | 2,0 |
| Ethoxylierter Tridecylalkohol (8 EO) | | 15,0 | |

Biologische Beispiele

In den folgenden Anwendungsbeispielen wurden die Testpflanzen im Gewächshaus in Töpfen angezogen. Die Applikation der in Wasser verdünnten Konzentrate erfolgte, als die monokotylen Pflanzen - Alopecurus myosuroides, Avena fatua und Triticum aestivum - das 3 - 4 Blattstadium erreicht hatten und die dikotylen Pflanzen - Stellaria media und Chenopodium album - bis zu einer Höhe von 5 - 10 cm gewachsen waren.

Nach 4 Wochen wurde die Wirkung (Schädigung) bonitiert. In den Tabellen wird der gefundene Wirkungsgrad dem erwarteten Wirkungsgrad gegenübergestellt.

Der erwartete Wirkungsgrad wurde nach der Formel von S.R Colby, Calculating synergistic and antagonistic response of herbizide combinations (Weeds 15, p. 20-22, 1967) berechnet.

Die Formel von Colby lautet:

$$E = X + Y - \frac{X \cdot Y}{100}$$

wobei

X = % Schädigung durch Herbizid A bei x kg(ha Aufwandmenge,

Y = % Schädigung durch Herbizid B bei y kg/ha Aufwandmenge,

E = die erwartete Schädigung der Herbizide A + B bei x + y kg/ha Aufwandmenge

bedeuten.

Ist die tatsächliche Schädigung größer als die errechnete, so ist die Wirkung der Kombination mehr als additiv, d.h. es liegt ein synergistischer Effekt vor. Bei den Kombinationsbehandlungen ist die aus obiger Formel errechnete Wirkung in Klammern angegeben.

Bekämpfung von mono- und dikotylen Unkräutern in Weizen (Triticum aestivum)

Tabelle

| | | Schädigung in % von | | | | |
|---|---|---|---|---|---|---|
| Wirkstoff[1)] | Dosis[2)] g AS/ha | Alopecurus myosuroides | Avena fatua | Stellaria media | Chenopodium album | Triticum aestivum |
| $A_1$ | 7,5 | 0 | 0 | 0 | 0 | 0 |
| | 15 | 0 | 0 | 0 | 0 | 0 |
| | 22,5 | 0 | 33 | 0 | 0 | 0 |
| | 30 | 27 | 45 | 0 | 0 | 0 |
| | 37,5 | 41 | 58 | 0 | 0 | 0 |
| | 45 | 52 | 63 | 0 | 0 | 0 |
| | 75 | 65 | 88 | 0 | 0 | 0 |
| | 150 | 87 | 96 | 0 | 0 | 0 |
| $B_1$ | 7,5 | 0 | 0 | 20 | 0 | 0 |
| | 15 | 0 | 0 | 40 | 0 | 0 |
| | 22,5 | 0 | 0 | 52 | 0 | 0 |
| | 30 | 0 | 0 | 60 | 0 | 0 |
| | 37,5 | 0 | 0 | 70 | 0 | 0 |
| | 45 | 0 | 0 | 75 | 0 | 0 |
| | 75 | 14 | 7 | 86 | 27 | 0 |
| | 150 | 24 | 7 | 100 | 40 | 0 |

1) zu den Bedeutungen von $A_1$ und $B_1$, s. Beschreibungsteil S. 2
2) AS = Aktivsubstanz

Tabelle

Bekämpfung von mono- und dikotylen Unkräutern in Weizen (Triticum aestivum)

| Wirkstoff | Dosis g AS/ha | Schädigung in % von Alopecurus myosuroides | Avena fatua | Stellaria media | Chenopodium album | Triticum aestivum |
|---|---|---|---|---|---|---|
| $A_1 + B_1$ | 22,5 + 22,5 | - | - | 82 (52) | - | 0 |
| | 45 + 45 | 87 (52) | 87 (63) | 90 (75) | - | 0 |
| | 7,5 + 37,5 | - | - | 87 (70) | - | 0 |
| | 15 + 75 | - | - | 99 (86) | - | 0 |
| | 30 + 150 | 72 (45) | 75 (49) | - | 68 (40) | 0 |
| | 37,5 + 7,5 | 78 (41) | 82 (58) | 68 (20) | - | 0 |
| | 75 + 15 | 90 (65) | 95 (88) | 77 (40) | - | 0 |
| | 150 + 30 | 99 (87) | - | 85 (60) | - | 0 |

## Patentansprüche

1. Herbizide Mittel gekennzeichnet durch einen Gehalt an einer Verbindung der Formel (A)

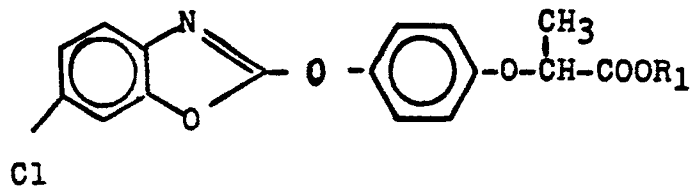

(A)

worin

$R_1$ = H, ($C_1$-$C_4$)-Alkyl, ($C_2$-$C_4$)-Alkinyl oder ein Kationäquivalent, in Kombination mit einer Verbindung der Formel (B)

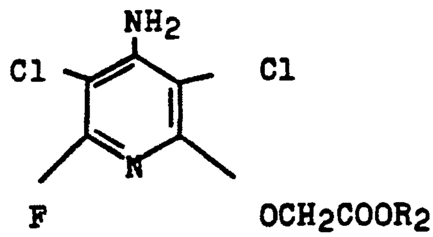

(B)

worin

$R_2$ = H, ($C_1$-$c_8$)-Alkyl oder ein Kationäquivalent bedeutet

worin das Mischungsverhältnis der Komponente der Formel (A) zur Komponente der Formel (B) im Bereich zwischen 1 : 10 und 15 1 variiert.

2. Herbizide Mittel gemäß Anspruch 1, dadurch gekennzeichnet, daß sie als Verbindung der Formel (A) α-(4-(6-Chlorobenzoxazolylozy)-phenoxy)-propionsäure-ethylester enthalten.

3. Herbizide Mittel gemäß Ansprüchen 1 oder 2, dadurch gekennzeichnet, daß in Formel (B) von Anspruch 1 $R_2$ = Octyl bedeutet.

4. Herbizide Mittel gemäß Ansprüchen 1 bis 3, dadurch gekennzeichnet, daß das Mischungsverhältnis der Komponente der Formel (A) zur Komponente der Formel (B) im Bereich zwischen 1 : 5 und 5 : 1 variiert.

5. Verwendung der herbiziden Mittel gemäß Ansprüchen 1 bis 4 zur Bekämpfung von unerwünschtem Pflanzenwuchs in Nutzpflanzenkulturen.

6. Verfahren zur Bekämpfung von Schadpflanzen in Nutzpflanzenkulturen, dadurch gekennzeichnet, daß man auf diese oder die Anbauflächen ein Mittel gemäß Ansprüchen 1 bis 4 aufbringt.

## Claims

1. A herbicidal agent containing a compound of the formula (A)

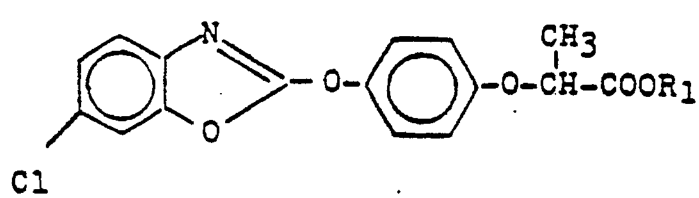

(A)

in which
$R_1$ is H, $(C_1$-$C_4)$-alkyl, $(C_2$-$C_4)$-alkinyl or one equivalent of a cation, in combination with a compound of the formula (B)

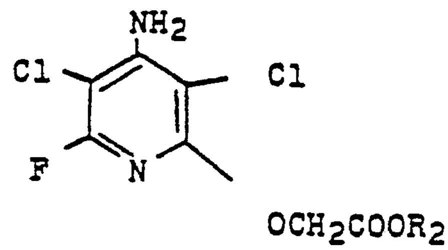

(B)

in which
$R_2$ is H, $(C_1$-$C_8)$-alkyl or one equivalent of a cation, in which the mixing ratio of the component of the formula (A) to the component of the formula (B) varies in the range from 1:10 to 15:1.

**2.** A herbicidal agent as claimed in claim 1, containing ethyl α-(4-(6-chlorobenzoxazolyloxy)-phenoxy)-propionate as the compound of the formula (A).

**3.** A herbicidal agent as claimed in either of claims 1 and 2, characterized in that $R_2$ in formula (B) of claim 1 is octyl.

**4.** A herbicidal agent as claimed in any one of claims 1 to 3, characterized in that the mixing ratio of the component of the formula (A) to the component of the formula (B) varies in the range from 1:5 to 5:1.

**5.** The use of a herbicidal agent as claimed in any one of claims 1 to 4, for combating undesirable plant growth in crops of useful plants.

**6.** A method of combating harmful plants in crops of useful plants, which comprises applying an agent as claimed in any one of claims 1 to 4 to these plants or to the cultivated areas.

**Revendications**

**1.** Produits herbicides caractérisés en ce qu'ils contiennent un composé répondant à la formule (A):

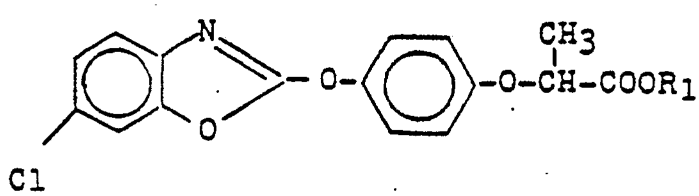

(A)

dans laquelle :
$R_1$ représente H, un alkyle en $C_1$-$C_4$, un alcynyle en $C_2$-$C_4$ ou un équivalent de cation, associé à un composé répondant à la formule (B) :

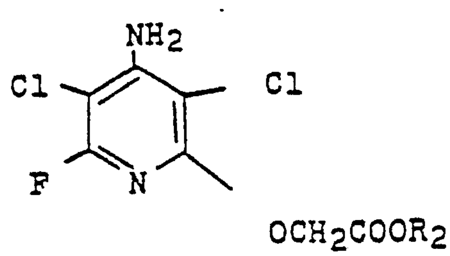

(B)

dans laquelle :
$R_2$ représente H, un alkyle en $C_1$-$C_8$ ou un équivalent de cation,
le rapport entre la quantité de la composante de formule (A) et celle de la composante de formule (a) étant compris entre 1 : 10 et 15 : 1.

**2.** Produits herbicides selon la revendication 1 caractérisés en ce qu'ils contiennent, comme composé de formule (A), le [(chloro-6 benzoxazolyloxy)-4 phénoxy]-2 propionate d'éthyle.

**3.** Produits herbicides selon l'une des revendications 1 et 2, caractérisés en ce que, dans la formule (B) de la revendication 1, le symbole $R_2$ représente un radical octyle.

**4.** Produits herbicides selon l'une quelconque des revendications 1 à 3, caractérisés en ce que le rapport entre la quantité de la composante de formule (a) et celle de la composante de formule (B) est compris entre 1 : 5 et 5 : 1.

**5.** Application des produits herbicides selon l'une quelconque des revendications 1 à 4 à la lutte contre la végétation indésirable dans des cultures de plantes utiles.

**6.** Procédé pour combattre des plantes nuisibles dans des cultures de plantes utiles, procédé caractérisé en ce qu'on applique sur celles-là, ou sur les surfaces cultivèes, un produit selon l'une quelconque des revendications 1 à 4.